# EUROPÄISCHE PATENTSCHRIFT

(11) **EP 3 147 158 B1**
(45) Veröffentlichungstag und Bekanntmachung des Hinweises auf die Patenterteilung: **21.06.2023**
(21) Anmeldenummer: 16189772.3
(22) Anmeldetag: 20.09.2016
(51) Int. Cl.: B60Q 1/50

(54) **VERFAHREN ZUM BETREIBEN EINER BELEUCHTUNGSEINRICHTUNG EINES KRAFTFAHRZEUGS UND KRAFTFAHRZEUG**
METHOD FOR OPERATING A LIGHTING DEVICE OF A MOTOR VEHICLE AND LIGHTING DEVICE FOR A MOTOR VEHICLE
PROCÉDÉ DE FONCTIONNEMENT D'UN DISPOSITIF D'ÉCLAIRAGE D'UN VÉHICULE AUTOMOBILE ET VÉHICULE AUTOMOBILE

(30) Priorität: 21.09.2015 DE 102015012021
(43) Veröffentlichungstag der Anmeldung: 29.03.2017
(73) Patentinhaber: AUDI AG, 85045 Ingolstadt (DE)
(72) Erfinder: Funk, Christian, 92339 Beilngries (DE); Barmeyer, Florenz, 02763 Zittau (DE); Armbruster, Tilman, 85055 Ingolstadt (DE); Reim, Johannes, 85072 Eichstätt (DE); Omerbegovic, Said, 65933 Frankfurt (DE)
(74) Vertreter: Lindner Blaumeier Patent- und Rechtsanwälte

(56) Entgegenhaltungen:
- EP-A1- 2 689 966
- EP-A1- 2 740 632
- DE-A1-102005 041 261
- DE-A1-102013 021 941
- DE-A1-102014 000 935
- DE-U1-202014 101 755
- US-A1- 2014 085 470

## Beschreibung

Die Erfindung betrifft ein Verfahren zum Betreiben einer Beleuchtungseinrichtung eines Kraftfahrzeugs, welche mittels aus Bilddaten ermittelten Steuersignalen zum Anstrahlen einer Projektionsfläche angesteuert wird, wobei die Bilddaten wenigstens ein auf der Projektionsfläche durch die Beleuchtungseinrichtung zu erzeugendes Bild beschreiben, wobei als Beleuchtungseinrichtung ein Scheinwerfer des Kraftfahrzeugs verwendet wird.

Beleuchtungseinrichtungen moderner Fahrzeuge stellen für deren Benutzer ein wichtiges Ausstattungsmerkmal zur Steigerung des Bedienkomforts des Kraftfahrzeugs dar. Dabei werden sie nicht mehr nur zur bloßen Ausleuchtung der Fahrzeugumgebung eingesetzt, sondern auch um eine Projektionsfläche, wie einen Fahrzeuguntergrund, mit einem Bild anzustrahlen. Dazu werden aus das zu erzeugende Bild beschreibenden Bilddaten Steuersignale generiert, mit denen die Beleuchtungseinrichtungen zum Anstrahlen der Projektionsfläche angesteuert wird.

So ist es bekannt, eine Beleuchtungseinrichtung in einem fahrerseitigen Außenspiegel des Kraftfahrzeugs vorzusehen. Beim Aufschließen der Fahrertür wird ein Triggersignal erzeugt, welches von der Beleuchtungseinrichtung ausgewertet wird, wonach von dieser ein Schriftzug oder ein entsprechend vorkonfiguriertes anderes Bild fahrerseitig auf dem Fahrzeuguntergrund dargestellt wird. Dabei lassen sich jedoch aufgrund des beschränkten Bauraums im Außenspiegel und der typischerweise verwendeten leistungsschwachen Beleuchtungseinrichtungen nur sehr kleine Bilder auf dem Fahrzeuguntergrund darstellen. Zudem erfolgt beim Betrieb der Beleuchtungseinrichtung keine Berücksichtigung der Relativposition der Projektionsfläche zum Kraftfahrzeug, was zu unerwünschten optischen Verzerrungen bis hin zu einer völligen Entstellung des Bildes führen kann.

EP 2 689 966 A1 offenbart eine Projektionseinrichtung bzw. ein Projektionssystem für ein Fahrzeug. Das System ist dazu eingerichtet, eine Information während der Fahrt des Fahrzeugs auf eine Projektionsfläche, die z.B. die vor dem Fahrzeug liegende Straße oder die Rückwand eines vorausfahrenden LKWs sein kann, zu projizieren. Diese Projektion kann beispielsweise einen Richtungspfeil, die aktuelle Geschwindigkeit oder eine Information betreffend ein Smartphone eines Nutzers darstellen. Hierzu ist vorgesehen, dass mittels einer Orientierungskontrolleinheit die Stellung des Projektors bezüglich des Fahrzeugs geändert bzw. eingestellt wird. Eine aufgrund des Winkels zwischen der Projektionsfläche und dem Fahrzeug verursachte Verzerrung des projizierten Bildes wird durch ein entsprechendes Vorverzerren ausgeglichen. Dieses Vorverzerren basiert auf mittels einer Kamera erfassten Daten.

DE 10 2014 000 935 A1 offenbart ein Konzept, bei dem mehrere Digitalprojektoren zur dreidimensionalen Beleuchtung einer Fahrbahn vor einem Fahrzeug dient. Hierbei werden Daten eines 3D-Kamerasystems erfasst, wobei die Position und die Orientierung aller infinitesimalen Projektionsflächenelemente der Szene vor dem Fahrzeug erfasst und ausgewertet wird. In Abhängigkeit hiervon wird ein Ausgabebild der Projektoren derart berechnet und erzeugt, dass die Oberflächen vor dem Fahrzeug homogen und verzerrungsfrei beleuchtet werden. Zudem können hierbei auch Warnsignale oder Texte auf die Fahrbahn vor das Fahrzeug projiziert werden. Eine weitere Beleuchtungseinrichtung ist aus der DE 10 2013 021941 A1 bekannt.

Der Erfindung liegt daher die Aufgabe zugrunde, eine Möglichkeit zur verbesserten Darstellung eines Bildes auf einer kraftfahrzeugnahen Projektionsfläche mittels einer Beleuchtungseinrichtung des Kraftfahrzeugs anzugeben. Diese Aufgabe wird bei einem Verfahren der eingangs genannten Art erfindungsgemäß dadurch gelöst, dass vor oder nach der Fahrt das Bild bei Vorliegen eines ein Annähern eines Nutzers an das und/oder ein Entfernen des Nutzers vom Kraftfahrzeug anzeigenden Triggersignals auf der Projektionsfläche erzeugt wird, wobei die Steuersignale in Abhängigkeit von eine Position und/oder eine Ausrichtung der Projektionsfläche bezüglich des Kraftfahrzeugs beschreibenden Sensordaten einer das Umfeld des Kraftfahrzeugs erfassenden Sensoreinrichtung derart angepasst werden, dass eine zu erwartende Verzerrung des Bildes beim Anstrahlen der Projektionsfläche durch den Scheinwerfer kompensiert wird.

Die Erfindung beruht auf der Überlegung, eine Relativposition der Projektionsfläche zum Kraftfahrzeug beschreibende Sensordaten aus einer Umfeldsensorik des Kraftfahrzeugs zu gewinnen und die zur Ansteuerung der Beleuchtungseinrichtung verwendeten Steuersignale aus den Bilddaten unter Berücksichtigung dieser Sensordaten zu erzeugen. Zudem wird für das Anstrahlen der Projektionsfläche erfindungsgemäß ein Scheinwerfer des Kraftfahrzeugs verwendet, der insbesondere frontseitig im Kraftfahrzeug verbaut ist und zum Ausleuchten des Fahrzeugvorfelds, beispielsweise als Abblend- und/oder Fernlicht, während der Fahrt ausgebildet ist. Nachdem nämlich Scheinwerfer entwickelt wurden, die nicht nur eine geringe Zahl an Leuchtmitteln aufweisen, sondern Zehn- bis Hunderttausende einzeln ansteuerbare Scheinwerferpixel erzeugen, wurde erkannt, dass sich ein solcher hochauflösender Scheinwerfer besonders für die Erzeugung eines durch Bilddaten beschriebenen Bilds auf der Projektionsfläche eignet. Üblicherweise werden derartige Scheinwerfer lediglich als adaptives Fernlicht zum Aussparen von andere Verkehrsteilnehmer blendenden Ausschnitten des Ausleuchtbereichs verwendet. Als Projektionsfläche können sowohl der Fahrbahnuntergrund im Fahrzeugvorfeld als auch eine frontseitig angeordnete Wand, beispielsweise einer Garage, in der das Kraftfahrzeug geparkt ist, oder eine Gebäudewand, verwendet werden.

Es ist mithin erfindungsgemäß vorgesehen, dass zunächst mittels der Sensoreinrichtung die Position und/oder die Ausrichtung der Projektionsfläche bezüglich des Kraftfahrzeugs beschreibende Sensordaten erfasst werden. Sodann werden die das zu erzeugende Bild beschreibenden Bilddaten, die beispielsweise in einer Speichereinheit des Kraftfahrzeugs vorliegen oder als Datenfluss von einer kraftfahrzeugexternen Datenquelle abgerufen werden, bevorzugt unter Verwendung einer Bildverarbeitungseinrichtung zur Erzeugung eines verzerrungsfreien Bildes verarbeitet. Auf die Bilddaten kann beispielsweise ein in Abhängigkeit der Position und/oder Ausrichtung der Projektionsfläche parametrisierter Transformationsalgorithmus angewendet werden, der die Kompensation der beim nicht angepassten Anstrahlen der Projektionsfläche entstehenden Verzerrung bewirkt. Anschließend werden aus den wie zuvor beschrieben transformierten Bilddaten Steuersignale für den Scheinwerfer generiert, mit denen insbesondere die Vielzahl an abstrahlbaren Scheinwerferpixeln aktiviert bzw. deaktiviert oder hinsichtlich einer Modifikation ihrer Helligkeit und/oder Farbe angesteuert werden. Schließlich kann die Projektionsfläche durch den Scheinwerfer angestrahlt und das durch die Bilddaten beschriebene Bild verzerrungsfrei auf der Projektionsfläche dargestellt werden.

Dem Benutzer des Kraftfahrzeugs, insbesondere seinem Fahrer, wird so stets ein verzerrungsfreies Bild auf der Projektionsfläche angezeigt. Durch die Verwendung des zuvor beschriebenen Scheinwerfers des Kraftfahrzeugs kann das Bild mit hoher Auflösung auf der Projektionsfläche dargestellt werden. Ein Willkommensschriftzug oder sogar ein individualisiertes Bild kann so perspektivisch korrekt erzeugt werden, wodurch eine wesentliche Verbesserung des Bedienungskomforts für den Benutzer des Kraftfahrzeugs erreicht wird.

Es kann bei dem erfindungsgemäßen Verfahren zudem vorgesehen sein, dass das Bild zusätzlich bei Vorliegen eines ein Starten eines Motors des Kraftfahrzeugs anzeigenden Triggersignals auf der Projektionsfläche erzeugt wird. Eine solche Leaving-Home-Funktion begrüßt den Fahrer mithin vor Fahrtantritt und vermittelt ihm so die besondere Hochwertigkeit der Beleuchtungseinrichtung des Kraftfahrzeugs. Insbesondere macht sie die technischen Fähigkeiten des Scheinwerfers seines Kraftfahrzeugs für ihn erlebbar. In analoger Weise kann alternativ oder zusätzlich vorgesehen sein, dass das Bild bei Vorliegen eines ein Stoppen des Motors des Kraftfahrzeugs anzeigenden Triggersignals auf der Projektionsfläche erzeugt wird. In diesem Fall wird eine sogenannte Coming-Home-Funktion ermöglicht, die den Benutzer nach Ende seiner Fahrt vom Kraftfahrzeug verabschiedet. Bevorzugt wird dazu eine das Triggersignal auswertende und den Scheinwerfer ansteuernde Steuereinrichtung verwendet. Es wird ferner denkbar, dass für die Erzeugung des das Annähern und/oder das Entfernen des Nutzers anzeigenden Triggersignals auch die zur Erfassung der Projektionsfläche vorgesehene Sensoreinrichtung verwendet wird, womit diese Funktionen ohne konstruktiven Zusatzaufwand umgesetzt werden können. Es ist aber selbstverständlich auch denkbar, dass das Triggersignal aus anderen im Kraftfahrzeug vorliegenden Steuersignalen, beispielsweise solchen einer Schließeinrichtung, gewonnen wird.

Es ist im Rahmen des erfindungsgemäßen Verfahrens zum einen denkbar, dass wenigstens ein Einzelbild beschreibende Bilddaten verwendet werden. Dadurch lassen sich statische Schriftzüge oder sogar Fotografien auf der Projektionsfläche darstellen. Es ist aber auch ohne weiteres möglich und bevorzugt, dass eine Bildsequenz beschreibenden Bilddaten verwendet werden. So lassen sich für das menschliche Auge als bewegt wahrnehmbare Bilder, beispielsweise in Form kurzer Videos, darstellen. Die besondere technische Leistungsfähigkeit des Scheinwerfers seines Kraftfahrzeugs kann dem Benutzer so besonders eindrücklich aufgezeigt werden.

Es ist daneben bei dem erfindungsgemäßen Verfahren von besonderem Vorteil, wenn die Bilddaten von einem tragbaren Kommunikationsgerät an das Kraftfahrzeug übertragen werden. Bevorzugt wird dazu kraftfahrzeugseitig eine mit der Bildverarbeitungseinrichtung verbundene Kommunikationseinrichtung verwendet. Dabei ist es sowohl denkbar, dass die Bilddaten in einer Speichereinheit der Bildverarbeitungseinrichtung abgelegt und von dort zur Erzeugung der Steuersignale abgerufen werden oder alternativ durch sogenanntes "Streaming" in Echtzeit, gegebenenfalls unter Verwendung von Pufferspeichern, vom Datenkommunikationsgerät an die Bildverarbeitungseinrichtung übertragen werden. Als tragbares Datenkommunikationsgerät wird bevorzugt ein Mobiltelefon, insbesondere ein Smartphone oder ein Tablet-PC, verwendet. Da derartige Datenkommunikationsgeräte für eine funkbasierte Datenübertragung ausgebildet sind, wird es besonders bevorzugt, wenn die Bilddaten drahtlos übertragen werden. Es ist selbstverständlich aber auch denkbar, dass die Bilddaten über eine herzustellende Kabelverbindung, beispielsweise über eine USB-Verbindung übertragen werden. Mit besonderem Vorteil kann der Benutzer so individuelle Bilddaten an das Kraftfahrzeug übertragen, die die durch seinen Scheinwerfer zu erzeugenden Bilder beschreiben. Zweckmäßigerweise wird dazu auf dem Datenkommunikationsgerät ein Computerprogramm, insbesondere eine nachinstallierte "App" verwendet, mittels welcher die darzustellenden Bilder übertragen und/oder zur Darstellung auf der Projektionsfläche ausgewählt werden können. Es ist aber auch möglich, dass die auf der Projektionsfläche zu erzeugenden Bilder durch den Benutzer mittels einer kraftfahrzeugseitigen Mensch-Maschine-Schnittstelle, beispielsweise einem grafischen Ein- und Ausgabegerät, ausgewählt werden.

Bei der Übertragung der Bilddaten von einem tragbaren Datenkommunikationsgerät wird es besonders bevorzugt, wenn kraftfahrzeugseitig ein kabelgebundenes Datennetzwerk verwendet wird, wobei die Bilddaten durch das Datenkommunikationsgerät zur Ermittlung der Steuersignale im Datennetzwerk bereitgestellt werden. Dieses kann beispielsweise auf dem besonders robusten und erprobten Ethernet-Standard basieren, wodurch eine für das Übertragen von Bildsequenzen in Form von Videos ausreichende Übertragungsbandbreite bereitsteht. Bevorzugt wird dabei die Kommunikationseinrichtung zur Realisierung einer Schnittstelle zwischen dem Datennetzwerk und dem tragbaren Datenkommunikationsgerät verwendet.

Es ist zudem bei der Verwendung eines Datenkommunikationsgeräts besonders zweckmäßig, wenn die Bilddaten drahtlos über eine Punkt-zu-Punkt-Funkverbindung oder ein das Datenkommunikationsgerät mit einem oder dem kraftfahrzeugseitigen Datennetzwerk verbindendes Funknetzwerk übertragen werden. Es ist mithin möglich, zwischen dem Datenkommunikationsgerät und der Kommunikationseinrichtung lediglich eine Punkt-zu-Punkt-Funkverbindung, bevorzugt durch Nutzung des Bluetooth-Standards, aufzubauen und darüber die Bilddaten zu übertragen. Es kann aber auch vorgesehen sein, ein lokales Funknetzwerk zur Übertragung der Bilddaten beispielsweise auf Basis eines WLAN-Standards zu errichten. Da in modernen Kraftfahrzeugen ohnehin eine Anbindung von Datenkommunikationsgeräten, beispielsweise zum Ermöglichen einer Freisprechfunktion für das Mobiltelefon, vorgesehen ist, kann die Bildübertragung vorteilhafterweise ohne nennenswerten Hardwareaufwand implementiert werden.

Um besonders hochauflösende Darstellungseigenschaften des Scheinwerfers zu ermöglichen, ist es bei dem erfindungsgemäßen Verfahren besonders zweckmäßig, wenn ein eine Lichtquelle und eine dieser nachgeschaltete Optikeinheit aufweisender Scheinwerfer verwendet wird, wobei die Optikeinheit mittels der Steuersignale angesteuert wird. Die Optikeinheit erzeugt mithin aus dem durch die Lichtquelle erzeugten Licht eine Lichtverteilung, die auf der Projektionsfläche das Bild erzeugt. Bevorzugt wird als Optikeinheit ein Flüssigkeitskristalldisplay oder eine Mikrospiegelanordnung verwendet. Bei Flüssigkeitskristalldisplays kommt als Optikeinheit eine transparente Aktivmatrix mit einzeln ansteuerbaren Flüssigkeitskristallen zum Einsatz, durch welche nur bestimmte Farb- und/oder Helligkeitsanteile des von der Lichtquelle erzeugten Lichts transmittiert werden. Bei einer Mikrospiegelanordnung, insbesondere einem mikrooptoelektromechanischen Systemen, gelangt das erzeugte Licht auf einzelne, jeweils einen Scheinwerferpixel realisierende, Mikrospiegel. Dabei ist jeder einzelne Spiegel so aktivierbar und deaktivierbar, dass er das Licht zur Erzeugung eines Bildpunkts auf die Projektionsfläche bzw. in eine andere Richtung oder nicht reflektiert. Durch schnelles intermittierendes Aktivieren und Deaktivieren einzelner Mikrospiegel mit einem vorgebbaren Tastverhältnis kann zudem eine für das menschliche Auge wahrnehmbaren Helligkeit einzelner Scheinwerferpixel auf Projektionsfläche variiert werden. Als Lichtquelle kann zudem ein Laser oder eine Leuchtdiode verwendet werden.

Daneben betrifft die Erfindung ein Kraftfahrzeug, gemäß Anspruch 9, umfassend eine Beleuchtungseinrichtung zum Anstrahlen einer Projektionsfläche mit wenigstens einem durch Bilddaten beschriebenen Bild und eine zum Ermitteln von die Beleuchtungseinrichtung ansteuernden Steuersignalen aus den Bilddaten ausgebildete Bildverarbeitungseinrichtung, wobei die Beleuchtungseinrichtung ein Scheinwerfer ist. Das erfindungsgemäße Kraftfahrzeug zeichnet sich dadurch aus, dass, eine Steuereinrichtung vorgesehen ist, welche zum Ansteuern des Scheinwerfers und/oder der Bildverarbeitungseinrichtung zum Erzeugen des Bilds auf der Projektionsfläche vor oder nach einer Fahrt bei Vorliegen eines ein Annähern eines Nutzers an das und/oder ein Entfernen des Nutzers vom Kraftfahrzeug anzeigenden Triggersignals ausgebildet ist, wobei eine zum Erfassen der Projektionsfläche ausgebildete Sensoreinrichtung vorgesehen und die Bildverarbeitungseinrichtung zum Kompensieren einer zu erwartenden Verzerrung des Bildes bei Anstrahlen der Projektionsfläche durch den Scheinwerfer durch Anpassen der Steuersignale in Abhängigkeit von eine Position und/oder eine Ausrichtung der Projektionsfläche bezüglich des Kraftfahrzeugs beschreibenden Sensordaten der Sensoreinrichtung ausgebildet ist.

Es kann bei dem erfindungsgemäßen Kraftfahrzeug mit Vorteil vorgesehen sein, dass die Steuereinrichtung ferner zum Ansteuern des Scheinwerfers zum Erzeugen des Bilds auf der Projektionsfläche bei Vorliegen eines ein Starten und/oder ein Stoppen eines Motors des Kraftfahrzeugs anzeigenden Triggersignals ausgebildet ist.

Daneben wird es bei dem erfindungsgemäßen Kraftfahrzeug bevorzugt, wenn eine zum Übertragen der Bilddaten an das Kraftfahrzeug ausgebildete Kommunikationseinrichtung vorgesehen ist.

Dabei ist es besonders vorteilhaft, wenn ein kabelgebundenes Datennetzwerk mit einer durch die Kommunikationseinrichtung realisierenden Schnittstelle vorgesehen ist, welche dazu ausgebildet ist, die Bilddaten vom Datenkommunikationsgerät der Bildverarbeitungseinrichtung über das Datennetzwerk bereitzustellen.

Zudem kann bei dem erfindungsgemäßen Kraftfahrzeug mit der Kommunikationseinrichtung vorgesehen sein, dass die Kommunikationseinrichtung zum drahtlosen Übertragen der Bilddaten über eine Punkt-zu-Punkt-Funkverbindung oder ein das Datenkommunikationsgerät mit einem oder dem kraftfahrzeugseitigen Datennetzwerk verbindendes Funknetzwerk ausgebildet ist.

Ferner wird es bei dem erfindungsgemäßen Kraftfahrzeug besonders bevorzugt, wenn der Scheinwerfer eine Lichtquelle oder eine dieser nachgeschaltete Optikeinheit aufweist, wobei die Optikeinheit durch die Steuersignale ansteuerbar ist.

Dabei ist es besonders zweckmäßig, wenn die Lichtquelle als ein Laser oder eine Leuchtdiode und/oder die Optikeinheit als ein Flüssigkeitskristalldisplay oder eine Mikrospiegelanordnung ausgebildet ist.

Sämtliche Ausführungen zum erfindungsgemäßen Verfahren lassen sich analog auf das erfindungsgemäße Kraftfahrzeug übertragen, so dass auch mit diesem die zuvor genannten Vorteile erzielt werden können.

Weitere Vorteile und Einzelheiten der Erfindung ergeben sich aus dem im Folgenden beschriebenen Ausführungsbeispiel sowie anhand der Zeichnung. Dabei zeigt die Figur eine schematische Darstellung eines erfindungsgemäßen Kraftfahrzeugs vor einer Projektionsfläche.

In der Figur ist eine schematische Darstellung eines Kraftfahrzeugs 1, welches vor einer Projektionsfläche 2 angeordnet ist. Das Kraftfahrzeug 1 umfasst einen Scheinwerfer 3, eine Bildverarbeitungseinrichtung 4, eine Sensoreinrichtung 5, eine Kommunikationseinrichtung 6 sowie eine Steuereinrichtung 7.

Der Scheinwerfer 3 weist eine Lichtquelle 8, beispielsweise in Form eines Lasers oder einer Leuchtdiode, sowie eine dieser nachgeschaltete Optikeinheit 9 auf, welche durch von der Bildverarbeitungseinrichtung 4 erzeugte Steuersignale zur Veränderung einer hochauflösenden, abstrahlbaren Lichtverteilung 10 ansteuerbar ist. Die Optikeinheit 9 ist als Mikrospiegelanordnung ausgebildet und umfasst mehrere einhunderttausend einzeln ansteuerbare Mikrospiegel, die in Abhängigkeit ihrer Ansteuerung das von der Lichtquelle 8 erzeugte Licht in einem aktivierten Zustand auf die Projektionsfläche 2 reflektieren und dort einen Scheinwerferpixel ausleuchten. Ebenso ist jeder Mikrospiegel zu seiner Deaktivierung ansteuerbar, wobei er das Licht nicht auf die Projektionsfläche 2 reflektiert, der Scheinwerferpixel mithin dunkel bleibt. Die Mikrospiegel sind zusätzlich einzeln mit einer hohen Frequenz unter einem Tastverhältnis intermittierend aktivierbar und deaktivierbar, um für das menschliche Auge scheinbare Helligkeitsabstufungen auf der Projektionsfläche 2 zu erzeugen. Alternativ zu einer Mikrospiegelanordnung kann die Optikeinheit 9 auch als Flüssigkeitskristalldisplay ausgebildet sein. In diesem Fall strahlt das von der Lichtquelle 8 erzeugte Licht, wie von einem Videoprojektor bekannt, durch eine pixelweise ansteuerbare aktive Flüssigkristallmatrix, wodurch sich ebenso einzeln ansteuerbare Scheinwerferpixel auf der Projektionsfläche 2 erzeugen lassen.

Die Sensoreinrichtung 5 umfasst eine im Inneren des Kraftfahrzeugs 1 verbaute Kamera 11, einen frontseitig angeordneten Radarsensor 12 und eine weitere Sensoreinheit 13, deren Sensorinformationen von einer Auswertungseinheit 14 zu die Umgebung des Kraftfahrzeugs 1 beschreibenden Sensordaten fusioniert und der Bildverarbeitungseinrichtung 4 sowie der Steuereinrichtung 7 bereitgestellt werden. Dabei beschreiben die Sensordaten die Position und die Ausrichtung der Projektionsfläche 2 zum Kraftfahrzeug 1.

Die Kommunikationseinrichtung 6 ist über ein kabelgebundenes, auf dem Ethernet-Standard basierendes kraftfahrzeugseitiges Datennetzwerk 15 mit der Bildverarbeitungseinrichtung 4 verbunden. Die Kommunikationseinrichtung 6 weist ferner eine Schnittstelle 16 auf, welche vorliegend als durch eine Antenne symbolisierte Funkschnittstelle ausgebildet ist und eine drahtlose Verbindung mit einem tragbaren Datenkommunikationsgerät 17 in Form eines Smartphones eines Benutzers 18 des Kraftfahrzeugs 1 ermöglicht. Über die Schnittstelle 16 ist eine auf dem Bluetooth-Standard basierende Punkt-zu-Punkt-Funkverbindung zum Übertragen von Bilddaten, die über das Datennetzwerk 15 an die Bildverarbeitungseinrichtung 4 leitbar sind, herstellbar. Alternativ zu einer Punkt-zu-Punkt-Funkverbindung kann das Datenkommunikationsgerät 17 auch über ein lokales Funknetzwerk (WLAN) mit dem Datennetzwerk 15 verbunden sein. Selbstverständlich ist alternativ auch eine kabelgebundene Verbindung des Datenkommunikationsgeräts 17 über eine entsprechend ausgebildete Schnittstelle 16, beispielsweise eine USB-Schnittstelle, mit dem Datennetzwerk 15 möglich.

Die Steuereinrichtung 7 ist mit der Sensoreinrichtung 5 verbunden, um von dieser den Benutzers 18 des Kraftfahrzeugs 1 betreffende Positionsinformationen zu erhalten, die seine Annäherung oder sein Entfernen an das Kraftfahrzeug 1 beschreiben. Insbesondere sind Sensorinformationen der weiteren Sensoreinheit 13 auswertbar, wobei diese ein Türschlosssensor des Kraftfahrzeugs 1 oder ein das Starten und Stoppen eines Motors des Kraftfahrzeugs 1 anzeigender Motor- oder Zündkreissensor sein kann. Aus dieser Sensorinformation ist durch die Auswertungseinheit 14 ein Triggersignal erzeugbar, bei dessen Vorliegen die Steuereinrichtung 7 die Bildverarbeitungseinrichtung 4 und den Scheinwerfer 3 ansteuert.

Im Rahmen eines Verfahrens zum Betrieb des Scheinwerfers 3 des Kraftfahrzeugs 1 werden zunächst mehrere Einzelbilder und mehrere Videosequenzen beschreibende Bilddaten vom Datenkommunikationsgerät 17 über die Schnittstelle 16 drahtlos von der Kommunikationseinrichtung 6 empfangen und über das Datennetzwerk 15 in der Bildverarbeitungseinrichtung 4 gespeichert. Der Benutzer 18 kann dabei über eine Mensch-Maschine-Schnittstelle 19 ein Einzelbild oder eine Bildsequenz auswählen, die er als Begrüßungs- oder Verabschiedungssequenz durch Anstrahlen der Projektionsfläche 2 mittels des Scheinwerfers 3 erzeugt sehen möchte. Alternativ dazu kann auf dem Datenkommunikationsgerät 17 auch ein Computerprogramm in Form einer "App" installiert sein, über die er eine entsprechende Auswahl vornehmen und Bilddaten an die Bildverarbeitungseinrichtung 4 übertragen kann.

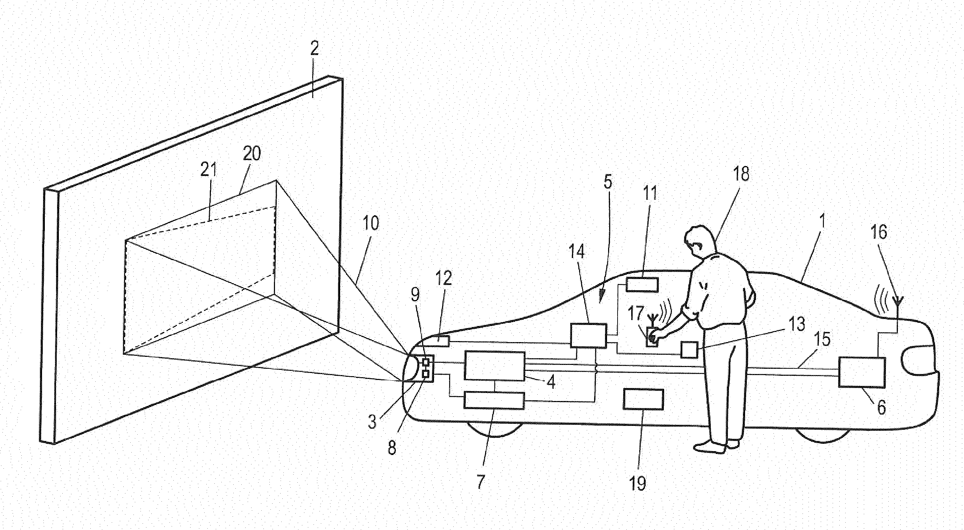

Bei einer Annäherung des Benutzers 18 an das Kraftfahrzeug 1 erzeugt die Auswertungseinheit 14 der Sensoreinrichtung 5 ein Triggersignal, aufgrund welches die Steuereinrichtung 7 die Bildverarbeitungseinrichtung 4 und den Scheinwerfer 3 zur Erzeugung eines Bildes 20 auf der Projektionsfläche 2 ansteuert. Dabei wird zunächst aus den fusionierten Sensordaten der Kamera 11 und des Radarsensors 12 die Position und Ausrichtung der Projektionsfläche 2 zum Kraftfahrzeug 1 durch die Bildverarbeitungseinrichtung 4 ermittelt. Nachdem die Projektionsfläche 2, wie aus Fig. 1 ersichtlich, schräg zur Fahrzeugquerachse angeordnet ist, parametrisiert die Bildverarbeitungseinrichtung 4 einen Transformationsalgorithmus, der auf die das Bild 20 beschreibenden Bilddaten angewendet wird, dahingehend dass eine zu erwartende, aus der Schrägstellung der Projektionsfläche 2 resultierende Verzerrung des Bildes 20 kompensiert wird. Im einfachsten Fall wird eine lineare Abbildungsmatrix parametrisiert, die durch Matrixmultiplikation mit den Bilddaten verknüpft wird. Gestrichelt ist dazu ein verzerrtes Bild 21 eingezeichnet, das ohne diese Transformation dargestellt werden würde.

Aus den transformierten Bilddaten erzeugt die Bildverarbeitungseinrichtung 4 schließlich Steuersignale für die Optikeinheit 9 des Scheinwerfers 3, deren Mikrospiegel das von der Lichtquelle 8 emittierte Licht zur Darstellung des Bildes 20 auf die Projektionsfläche 2 reflektieren, wodurch der Benutzer 18 beim Annähern an sein Kraftfahrzeug 1 begrüßt wird. In analogerweise kann auch bei einem auf ein Entfernen vom oder ein Verlassen des Fahrzeugs hinweisenden Triggersignal eine entsprechende Verabschiedungssequenz für den Benutzer 18 dargestellt werden. Diesem wird durch die hochauflösende Darstellung des Bilds 20 zur Begrüßung und Verabschiedung die besondere technische Leistungsfähigkeit des hochauflösenden Scheinwerfers 3 verdeutlicht und so ein wesentliches Komfortmerkmal des Kraftfahrzeugs 1 für den Benutzer 18 erlebbar gemacht. Zudem können durch die Vorgabe individueller Begrüßungs- und Verabschiedungssequenzen die Betriebseigenschaften des Scheinwerfers 3 personalisiert werden, wobei es auch denkbar ist, dass für mehrere identifizierbare Benutzer 18 jeweils unterschiedliche Bilder 20 dargestellt werden. Eine Unterscheidung der Benutzer 18, für die jeweils ein Benutzerprofil in der Bildverarbeitungseinrichtung 4 hinterlegt ist, kann beispielsweise über eine Erkennung des vom Nutzer 18 mitgeführten Datenkommunikationsgeräts 17, eine Gesichtserkennung durch die Kamera 11 oder die Verwendung individueller Kraftfahrzeugschlüssel oder diese ersetzende Identifizierungsmittel durch die Sensoreinheit 13 erfolgen.

## Patentansprüche

1. Verfahren zum Betreiben einer Beleuchtungseinrichtung eines Kraftfahrzeugs (1), welche mittels aus Bilddaten ermittelten Steuersignalen zum Anstrahlen einer Projektionsfläche (2) angesteuert wird, wobei die Bilddaten wenigstens ein auf der Projektionsfläche (2) durch die Beleuchtungseinrichtung zu erzeugendes Bild (20) beschreiben, wobei als Beleuchtungseinrichtung ein Scheinwerfer (3) des Kraftfahrzeugs (1) verwendet wird, wobei die Steuersignale in Abhängigkeit von eine Position und/oder eine Ausrichtung der Projektionsfläche (2) bezüglich des Kraftfahrzeugs (1) beschreibenden Sensordaten einer das Umfeld des Kraftfahrzeugs (1) erfassenden Sensoreinrichtung (5) derart angepasst werden, dass eine zu erwartende Verzerrung des Bildes (20) beim Anstrahlen der Projektionsfläche (2) durch den Schweinwerfer (3) kompensiert wird, **dadurch gekennzeichnet, dass** vor oder nach einer Fahrt das Bild (20) bei Vorliegen eines ein Annähern eines Nutzers (18) an das und/oder ein Entfernen des Nutzers (18) vom Kraftfahrzeug (1) anzeigenden Triggersignals auf der Projektionsfläche (2) erzeugt wird.

2. Verfahren nach Anspruch 1,
**dadurch gekennzeichnet,**
**dass** das Bild (20) zusätzlich bei Vorliegen eines ein Starten und/oder Stoppen eines Motors des Kraftfahrzeugs (1) anzeigenden Triggersignals auf der Projektionsfläche (2) erzeugt wird.

3. Verfahren nach Anspruch 1 oder 2,
**dadurch gekennzeichnet,**
**dass** wenigstens ein Einzelbild und/oder eine Bildsequenz beschreibende Bilddaten verwendet werden.

4. Verfahren nach einem der vorhergehenden Ansprüche,
**dadurch gekennzeichnet,**
**dass** die Bilddaten von einem tragbaren Datenkommunikationsgerät (17) an das Kraftfahrzeug (1) übertragen werden.

5. Verfahren nach Anspruch 4,
**dadurch gekennzeichnet,**
**dass** kraftfahrzeugseitig ein kabelgebundenes Datennetzwerk (15) verwendet wird, wobei die Bilddaten durch das Datenkommunikationsgerät (17) zur Ermittlung der Steuersignale im Datennetzwerk (15) bereitgestellt werden.

6. Verfahren nach Anspruch 4 oder 5,
**dadurch gekennzeichnet,**
**dass** die Bilddaten drahtlos über eine Punkt-zu-Punkt-Funkverbindung oder ein das Datenkommunikationsgerät (17) mit einem oder dem kraftfahrzeugseitigen Datennetzwerk (15) verbindendes Funknetzwerk übertragen werden.

7. Verfahren nach einem der vorhergehenden Ansprüche,
**dadurch gekennzeichnet,**
**dass** ein eine Lichtquelle (8) und eine dieser nachgeschaltete Optikeinheit (9) aufweisender Scheinwerfer (3) verwendet wird, wobei die Optikeinheit (9) mittels der Steuersignale angesteuert wird.

8. Verfahren nach Anspruch 7,
**dadurch gekennzeichnet,**
**dass** als Lichtquelle (8) ein Laser oder eine Leuchtdiode und/oder als Optikeinheit (9) ein Flüssigkristalldisplay oder eine Mikrospiegelanordnung verwendet wird.

9. Kraftfahrzeug, umfassend eine Beleuchtungseinrichtung zum Anstrahlen einer Projektionsfläche (2) mit wenigstens einem durch Bilddaten beschriebenen Bild (20) und eine zum Ermitteln von die Beleuchtungseinrichtung (3) ansteuernden Steuersignalen aus den Bilddaten ausgebildete Bildverarbeitungseinrichtung (4), wobei die Beleuchtungseinrichtung ein Scheinwerfer (3) ist, wobei eine zum Erfassen der Projektionsfläche (2) ausgebildete Sensoreinrichtung (5) vorgesehen und die Bildverarbeitungseinrichtung (4) zum Kompensieren einer zu erwartenden Verzerrung des Bildes (20) beim Anstrahlen der Projektionsfläche (2) durch den Scheinwerfer (3) durch Anpassen der Steuersignale in Abhängigkeit von eine Position und/oder eine Ausrichtung der Projektionsfläche (2) bezüglich des Kraftfahrzeugs (1) beschreibenden Sensordaten der Sensoreinrichtung (5) ausgebildet ist,
**dadurch gekennzeichnet,**
**dass** eine Steuereinrichtung (7) vorgesehen ist, welche zum Ansteuern des Scheinwerfers (3) und/oder der Bildverarbeitungseinrichtung (4) zum Erzeugen des Bilds (20) auf der Projektionsfläche (2) vor oder nach einer Fahrt bei Vorliegen eines ein Annähern eines Nutzers (18) an das und/oder ein Entfernen des Nutzers (18) vom Kraftfahrzeug (1) anzeigenden Triggersignals ausgebildet ist.

10. Kraftfahrzeug nach Anspruch 9,
**dadurch gekennzeichnet,**
**dass** die Steuereinrichtung (7) ferner zum Ansteuern des Scheinwerfers (3) und/oder der Bildverarbeitungseinrichtung (4) zum Erzeugen des Bilds (20) auf der Projektionsfläche (2) bei Vorliegen eines ein Starten und/oder Stoppen eines Motors des Kraftfahrzeugs (1) anzeigenden Triggersignals ausgebildet ist.

11. Kraftfahrzeug nach Anspruch 9 oder 10,
**dadurch gekennzeichnet,**
**dass** eine zum Übertragen der Bilddaten an das Kraftfahrzeug (1) ausgebildete Kommunikationseinrichtung (6) vorgesehen ist.

12. Kraftfahrzeug nach Anspruch 11,
**dadurch gekennzeichnet,**
**dass** ein kabelgebundenes Datennetzwerk (15) mit einer durch die Kommunikationseinrichtung (6) realisierten Schnittstelle (16) vorgesehen ist, welche dazu ausgebildet ist, die Bilddaten vom Datenkommunikationsgerät (17) der Bildverarbeitungseinrichtung (4) über das Datennetzwerk (15) bereitzustellen.

13. Kraftfahrzeug nach Anspruch 11 oder 12,
**dadurch gekennzeichnet,**
**dass** die Kommunikationseinrichtung (6) zum drahtlosen Übertragen der Bilddaten über eine Punkt-zu-Punkt-Funkverbindung oder ein das Datenkommunikationsgerät (16) mit einem oder dem kraftfahrzeugseitigen Datennetzwerk (15) verbindendes Funknetzwerk ausgebildet ist.

14. Kraftfahrzeug nach einem der Ansprüche 9 bis 13,
**dadurch gekennzeichnet,**
**dass** der Scheinwerfer (3) eine Lichtquelle (8) und eine dieser nachgeschaltete Optikeinheit (9) aufweist, wobei die Optikeinheit (9) durch die Steuersignale ansteuerbar ist.

15. Kraftfahrzeug nach Anspruch 14,
**dadurch gekennzeichnet,**
**dass** die Lichtquelle (8) als ein Laser oder eine Leuchtdiode und/oder die Optikeinheit (9) als ein Flüssigkristalldisplay oder eine Mikrospiegelanordnung ausgebildet ist.

## Claims

1. Method for operating a lighting device of a motor vehicle (1), which lighting device, by way of control signals determined from image data, is actuated to shine on a projection surface (2), wherein the image data describe at least one image (20) to be generated on the projection surface (2) by the lighting device, wherein a headlamp (3) of the motor vehicle (1) is used as the lighting device, wherein the control signals are adjusted in such a way on the basis of sensor data describing a position and/or an alignment of the projection surface (2) with respect to the motor vehicle (1) and originating from a sensor device (5) that detects the surround of the motor vehicle (1) that an expected distortion of the image (20) when the headlamp (3) shines on the projection surface (2) is compensated for, **characterized in that**, before or after a trip, the image (20) is generated on the projection surface (2) when a trigger signal indicating an approach of a user (18) to, and/or the retreat of the user (18) from, the motor vehicle (1) is present.

2. Method according to Claim 1,
**characterized**
**in that** the image (20) is additionally generated on the projection surface (2) if a trigger signal indicating a starting and/or stopping of a motor of the motor vehicle (1) is present.

3. Method according to Claim 1 or 2,
**characterized**
**in that** image data describing at least one individual image and/or an image sequence are used.

4. Method according to any of the preceding claims,
**characterized**
**in that** the image data are transmitted to the motor vehicle (1) from a portable data communications apparatus (17) .

5. Method according to Claim 4,
**characterized**
**in that** on part of the motor vehicle a wired data network (15) is used, wherein the image data are provided by the data communications apparatus (17) for the purpose of determining the control signals in the data network (15) .

6. Method according to Claim 4 or 5,
**characterized**
**in that** the image data are transmitted wirelessly via a point-to-point radio connection or via a radio network connecting the data communications apparatus (17) to a or the data network (15) on part of the motor vehicle.

7. Method according to any of the preceding claims,
**characterized**
**in that** use is made of a headlamp (3) comprising a light source (8) and an optics unit (9) downstream of the latter, with the optics unit (9) being actuated by means of the control signals.

8. Method according to Claim 7,
**characterized**
**in that** a laser or a light-emitting diode is used as light source (8) and/or a liquid crystal display or a micromirror arrangement is used as optics unit (9).

9. Motor vehicle, comprising a lighting device for shining at least one image (20) described by image data onto a projection surface (2) and an image processing device (4) designed to determine from the image data control signals which actuate the lighting device (3), wherein the lighting device is a headlamp (3), wherein a sensor device (5) designed to detect the projection surface (2) is provided and the image processing device (4) is designed to compensate for an expected distortion of the image (20) when the headlamp (3) shines on the projection surface (2), the compensation being brought about by adjusting the control signals on the basis of sensor data from the sensor device (5) which describe a position and/or an alignment of the projection surface (2) with respect to the motor vehicle (1),
**characterized**
**in that** a control device (7) is provided, which is designed to actuate the headlamp (3) and/or the image processing device (4) for the purpose of generating the image (20) on the projection surface (2) before or after a trip if a trigger signal indicating an approach of a user (18) to and/or a retreat of the user (18) from the motor vehicle (1) is present.

10. Motor vehicle according to Claim 9,
**characterized**
**in that** the control device (7) is further designed to actuate the headlamp (3) and/or the image processing device (4) to generate the image (20) on the projection surface (2) when a trigger signal indicating a starting and/or stopping of a motor of the motor vehicle (1) is present.

11. Motor vehicle according to Claim 9 or 10,
**characterized**
**in that** a communications device (6) designed to transmit the image data to the motor vehicle (1) is provided.

12. Motor vehicle according to Claim 11,
**characterized**
**in that** a wired data network (15) with an interface (16) realized by the communications device (6) is provided, which interface is designed to provide the image data from the data communications apparatus (17) of the image processing device (4) via the data network (15).

13. Motor vehicle according to Claim 11 or 12,
**characterized in that**
the communications device (6) is designed for the wireless transmission of the image data via a point-to-point radio connection or a radio network connecting the data communications apparatus (16) to a or the data network (15) on part of the motor vehicle.

14. Motor vehicle according to any of Claims 9 to 13,
**characterized**
**in that** the headlamp (3) comprises a light source (8) and an optics unit (9) downstream of the latter, with the optics unit (9) being actuatable by the control signals.

15. Motor vehicle according to Claim 14,
**characterized**
**in that** the light source (8) is designed as a laser or light-emitting diode and/or the optics unit (9) is designed as a liquid crystal display or as a micromirror arrangement.

## Revendications

1. Procédé permettant de faire fonctionner un dispositif d'éclairage d'un véhicule automobile (1) qui est piloté au moyen de signaux de commande déterminés à partir de données d'image pour illuminer une surface de projection (2), dans lequel les données d'image décrivent au moins une image (20) à générer sur la surface de projection (2) par le dispositif d'éclairage, dans lequel un phare (3) du véhicule automobile (1) est utilisé comme dispositif d'éclairage,
dans lequel les signaux de commande sont adaptés en fonction de données de capteur décrivant une position et/ou une orientation de la surface de projection (2) par rapport au véhicule automobile (1), provenant d'un dispositif capteur (5) détectant l'entourage du véhicule automobile (1), de telle sorte qu'une distorsion attendue de l'image (20) est compensée lors de l'illumination de la surface de projection (2) par le phare (3),
**caractérisé en ce qu'**avant ou après un trajet, l'image (20) est générée sur la surface de projection (2) s'il existe un signal de déclenchement indiquant qu'un utilisateur s'approche (18) et/ou qu'un utilisateur (18) s'éloigne du véhicule automobile (1).

2. Procédé selon la revendication 1, **caractérisé en ce que** l'image (20) est de plus générée sur la surface de projection (2) s'il existe un signal de déclenchement indiquant un démarrage et/ou un arrêt du moteur du véhicule automobile (1).

3. Procédé selon la revendication 1 ou 2, **caractérisé en ce que** des données d'image décrivant au moins une image individuelle et/ou une séquence d'images sont utilisées.

4. Procédé selon l'une quelconque des revendications précédentes, **caractérisé en ce que** les données d'image sont transmises au véhicule automobile (1) par un appareil de communication de données portable (17).

5. Procédé selon la revendication 4, **caractérisé en ce qu'**un réseau de données (15) câblé est utilisé côté véhicule automobile, dans lequel les données d'image sont fournies dans le réseau de données (15) par l'appareil de communication de données (17) pour la détermination des signaux de commande.

6. Procédé selon la revendication 4 ou 5, **caractérisé en ce que** les données d'image sont transmises sans fil par une liaison radio de point à point ou par un réseau radio reliant l'appareil de communication de données (17) à un ou audit réseau de données (15) côté véhicule automobile.

7. Procédé selon l'une quelconque des revendications précédentes, **caractérisé en ce qu'**un phare (3) présentant une source de lumière (8) et une unité optique (9) placé en aval de celle-ci est utilisé, dans lequel l'unité optique (9) est pilotée au moyen des signaux de commande.

8. Procédé selon la revendication 7, **caractérisé en ce qu'**un laser et une diode électroluminescente est utilisé(e) comme source de lumière (8) et/ou un affichage à cristaux liquides ou un ensemble de micromiroirs est utilisé comme unité optique (9).

9. Véhicule automobile, comprenant un dispositif d'éclairage servant à illuminer une surface de projection (2) avec au moins une image (20) décrite par des données d'image, et un dispositif de traitement d'image (4) réalisé pour déterminer des signaux de commande pilotant le dispositif d'éclairage (3) à partir des données d'image, le dispositif d'éclairage étant un phare (3), dans lequel un dispositif capteur (5) réalisé pour détecter la surface de projection (2) est prévu, et le dispositif de traitement d'image (4) est réalisé pour compenser une distorsion attendue de l'image (20) lors de l'illumination de la surface de projection (2) par le phare (3) par l'adaptation des signaux de commande en fonction de données de capteur du dispositif capteur (5) décrivant une position et/ou une orientation de la surface de projection (2) par rapport au véhicule automobile (1),
**caractérisé en ce qu'**un dispositif de commande (7) est prévu qui est réalisé pour piloter le phare (3) et/ou le dispositif de traitement d'image (4) pour générer l'image (20) sur la surface de projection (2) avant ou après un trajet s'il existe un signal de déclenchement indiquant qu'un utilisateur (18) s'approche et/ou qu'un utilisateur (18) s'éloigne du véhicule automobile (1).

10. Véhicule automobile selon la revendication 9, **caractérisé en ce que** le dispositif de commande (7) est en outre réalisé pour piloter le phare (3) et/ou le dispositif de traitement d'image (4) pour générer l'image (20) sur la surface de projection (2) s'il existe un signal de déclenchement indiquant un démarrage et/ou un arrêt du moteur du véhicule automobile (1).

11. Véhicule automobile selon la revendication 9 ou 10, **caractérisé en ce qu'**un dispositif de communication (6) réalisé pour transmettre les données d'image au véhicule automobile (1) est prévu.

12. Véhicule automobile selon la revendication 11, **caractérisé en ce qu'**un réseau de données câblé (15) avec une interface (16) réalisée par le dispositif de communication (6) est prévu qui est réalisé pour fournir les donnés d'image de l'appareil de communication de données (17) au dispositif de traitement d'image (4) par le réseau de données (15).

13. Véhicule automobile selon la revendication 11 ou 12, **caractérisé en ce que** le dispositif de communication (6) est réalisé pour la transmission sans fil des données d'image par une liaison radio de point à point ou par un réseau radio reliant l'appareil de communication de données (16) à un ou audit réseau de données (15) côté véhicule automobile.

14. Véhicule automobile selon l'une quelconque des revendications 9 à 13, **caractérisé en ce que** le phare (3) présente une source de lumière (8) et une unité optique (9) placée en aval de celle-ci, l'unité optique (9) pouvant être pilotée par les signaux de commande.

15. Véhicule automobile selon la revendication 14, **caractérisé en ce que** la source de lumière (8) est réalisée sous la forme d'un laser ou d'une diode électroluminescente, et/ou l'unité optique (9) est réalisée sous la forme d'un affichage à cristaux liquides ou d'un ensemble de micromiroirs.
